# EUROPÄISCHE PATENTSCHRIFT

(11) **EP 0 369 520 B1**
(45) Veröffentlichungstag und Bekanntmachung des Hinweises auf die Patenterteilung: **22.02.1995**
(21) Anmeldenummer: 89202811.9
(22) Anmeldetag: 08.11.1989
(51) Int. Cl.: F16F 7/12, B62D 1/19, B60R 19/34

(54) **Bauelement zur Absorption von Energie**
Energy-absorption construction element
Elément de construction pour l'absorption d'énergie

(30) Priorität: 15.11.1988 DE 3838595
(43) Veröffentlichungstag der Anmeldung: 23.05.1990
(73) Patentinhaber: KOLBENSCHMIDT Aktiengesellschaft, D-74150 Neckarsulm (DE)
(72) Erfinder: Drefahl, Klaus, D-6450 Hanau am Main (DE)
(74) Vertreter: Rieger, Harald, Dr.

(56) Entgegenhaltungen:
- DE-A- 2 046 350
- DE-B- 1 271 573
- FR-A- 1 586 115
- G. WÜRTTEMBERGER "Fachbuch für metallverarbeitende Berufe", 1976, VDE-Verlag Berlin, Seite 294, Absatz 4.1.7.5, Bild 294/1

## Beschreibung

Die Erfindung betrifft ein Bauelement zur Absorption von Energie, bestehend aus einem im Verhältnis zu seinen Querabmessungen langen, prismatischen, geraden, unter axial wirkender Drucklast in Richtung der Achse des größeren Hauptträgheitsmoments nicht-elastisch ausknickbaren Metallstab. Ein derartiges Bauelement ist aus der FR-A-1 586 115 bekannt.

Der passiven Sicherheit der Insassen von Kraftfahrzeugen wird heute im allgemeinen große Aufmerksamkeit gewidmet, beispielsweise durch starr gestaltete Fahrgastzellen, Knautschzonen aus deformierbaren Karosserieteilen mit hohem Absorptionsvermögen für Stoßenergie vor und hinter der Fahrgastzelle sowie Aufprallschutzelemente am Lenkrad für Kraftfahrzeuge. Der physischen Belastbarkeit des menschlichen Körpers durch abrupte Abbremsung des Kraftfahrzeugs im Falle einer Kollision sind bestimmte Grenzen gesetzt. So besteht für den Konstrukteur von Kraftfahrzeugen die Forderung, daß an den Körperteilen Kopf, Brust und Becken über einen Zeitraum von nicht länger als 3 ms höchstens Bremsverzögerungen von 80 x g für den Kopf und 60 x g für Brust und Becken auftreten dürfen. Da die Gesamtdauer der Kollision eines Kraftfahrzeuges jedoch etwa 90 ms beträgt, muß der Kraftfahrzeugkonstrukteur für ausreichende Verzögerung der rotatorischen Vorwärtsbewegung des Oberkörpers des Kraftfahrzeuglenkers durch die Verwendung von formänderbaren Bauelementen über möglichst große Wege innerhalb des Kraftfahrzeugs Sorge tragen. Für solche Zwecke sind formänderbare Bauelemente aus Aluminiumwaben, Aluminiumschaum oder füllstoffhaltigem Metallschwamm, z.B. auf der Basis von Aluminium, Zink, Magnesium, Nickel, Kupfer, Blei oder deren Legierungen, entwickelt worden (DE-A-2 049 918). Obwohl diesen Bauelementen nach der stoßartig auftretenden Drucklast ein rascher Anstieg und anschließend ein annähernd horizontaler Verlauf des Formänderungswegs eigen ist und somit ein brauchbares Energieabsorptionsvermögen vorliegt, sind derartige Bauelemente nicht über die Erprobung hinausgekommen, weil eine exakte Reproduzierbarkeit des Verlaufs des Formänderungswegs in Abhängigkeit von der Formänderungsdruckkraft, der im Idealfall die Form eines Trapezes unter der Kraft-Weg-Kennlinie besitzt, nicht möglich war. Das gilt prinzipiell auch für die in der DE-B-1 271 573 beschriebene Stoßdämpfvorrichtung für Kraftfahrzeuge, bei der zwischen der Stoßstange und dem Tragwerk energieverzehrende Knickstäbe vorgesehen sind.

Um im Falle einer Kollision die Vorwärtsbewegung, insbesondere des Kopfes und der Brust des Kraftfahrzeuglenkers nach dem Aufprall auf das Lenkrad zu verzögern, sind an den Speichen des Lenkrades Sollknickstellen und in der Mitte des Lenkrades über der Lenkradnabe ein aus plastisch deformierbarem Kunststoffschaum bestehender Formänderungskörper vorgesehen. Diese werden jedoch bei stoßartig auftretender Drucklast der Forderung nach ausreichender Länge des Formänderungswegs nicht gerecht. Zwar erfolgt beim Aufprall auf das Lenkrad zunächst eine plastische Formänderung, die aber mit stark ansteigendem Formänderungswiderstand in eine unerwünschte elastische Formänderung übergeht.

Es ist die Aufgabe der vorliegenden Erfindung, ein Bauelement zur Absorption von Energie durch nicht-elastische Formänderung bereitzustellen, dessen charakteristische Weg-Druckkraft-Kennlinie Trapezform besitzt, deren Verlauf der idealen Weg-Druckkraft-Kennlinie sehr angenähert und reproduzierbar ist.

Gelöst ist diese Aufgabe sowohl durch die Merkmale des Anspruchs 1 als auch des Anspruchs 8.

Bei axialer Drucklast erfolgt ein Ausknicken des Metallstabs mit kleinen sinusförmigen, aber beliebigen Ausbiegungen im Bereich seiner freien Knicklänge, wobei der Formänderungsweg anfangs vergleichsweise steil ansteigt und über die restliche Zeit im wesentlichen horizontal bleibt, weil sich die Zähne der Geradverzahnung im Bereich der freien Knicklänge, beginnend im Maximum der Ausknickung, fortschreitend nach beiden Seiten hin gegeneinander abstützen.

Eine optimale Absorption von Energie ist erreichbar, wenn die Geradverzahnung auf der der vorbestimmten Ausknickrichtung gegenüberliegenden Breitseite des Metallstabs im Bereich der freien Knicklänge und in den Bereichen zwischen den Befestigungen des Metallstabs und den Wendepunkten der Ausknickung auf der in die gewünschte Ausknickrichtung weisenden Breitseite angebracht ist.

Im allgemeinen erstreckt sich die Geradverzahnung über die gesamte Breitseite des Metallstabs.

Zur Erhöhung der Drucklast des Metallstabs besteht die Möglichkeit, eine von den parallel zu der die Achsen der beiden Hauptträgheitsmomente einschließenden Ebene liegenden Schmalseiten her angebrachte Geradverzahnung vorzusehen, die sich jeweils nur über weniger als 50 %, vorzugsweise 20 bis 40 %, der Breitseiten erstreckt.

Im Rahmen der besonderen Ausgestaltung der Erfindung sind an einer oder an beiden der Schmalseiten des Metallstabs einteilig mit diesem verbundene Zinken kammartig angeordnet und unter Bildung der Geradverzahnung auf die Breitseiten gebogen.

Als weitere Ausgestaltung des Metallstabs besitzen die Zähne der Geradverzahnung des Metallstabs ein Evolventen-, Zykloiden-, Kreisbogen- oder U-Profil mit senkrechten oder geneigten Zahnflanken.

Die Anwendung des erfindungsgemäß gestalteten Metallstabs ist insbesondere für die Halterung von Stoßstangen von Kraftfahrzeugen sowie für die Anordnung im Bereich der Knautschzonen vor und hinter der Fahrgastzelle von Kraftfahrzeugen sowie zum Einbau in die Speichen von Lenkrädern für Kraftfahrzeuge geeeignet.

Der erfindungsgemäß gestaltete Metallstab ist in den Zeichnungen beispielhaft dargestellt und wird nachfolgend näher erläutert.

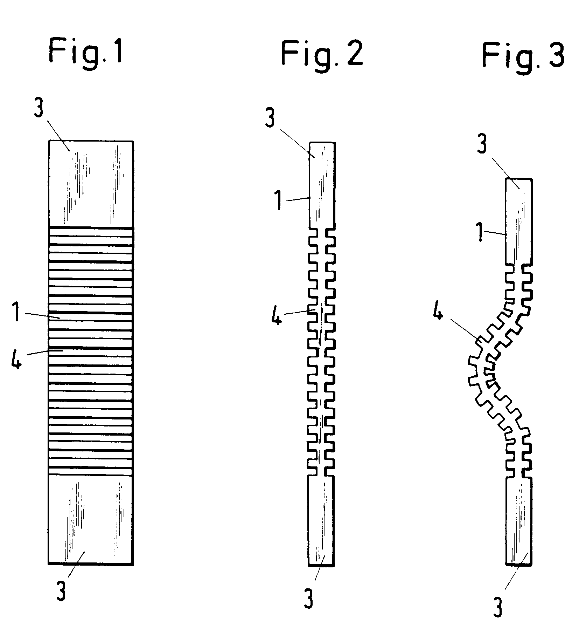

Bei dem in Fig. 1 in einer Seitenansicht in Richtung der Achse des größeren Hauptträgheitsmoments dargestellten, aus Stahl des Typs St37 bestehenden Metallstab (1), der in Fig. 2 als Ansicht auf eine der Schmalseiten wiedergegeben ist, sind die beiden Breitseiten zwischen dessen Befestigungen (3) vollständig mit einer Geradverzahnung (4) mit rechteckförmigen Zähnen versehen. Fig. 3 zeigt in einer Ansicht auf eine der Schmalseiten des Metallstabs (1) die Formänderung des Bauelements durch Ausknicken nach der Einwirkung einer stoßartig aufgebrachten Drucklast.

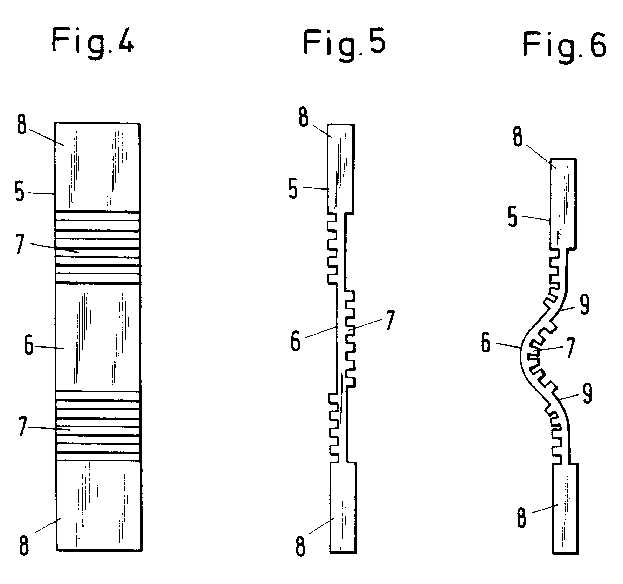

Der in Fig. 4 als Seitenansicht in Richtung der Achse des größeren Hauptträgheitsmoments gezeigte Metallstab (5), der in Fig. 5 als Ansicht auf eine der Schmalseiten dargestellt ist, besteht aus Stahl des Typs St60. Im Bereich der freien Knicklänge (6) des Bauelements ist auf der der Ausknickrichtung gegenüberliegenden Breitseite eine Geradverzahnung (7) mit rechteckförmigen Zähnen angebracht. Im Bereich zwischen den Befestigungen (8) des Metallstabs (5) und den Wendepunkten (9) der Ausknickung verläuft die Geradverzahnung (7) auf der in Ausknickrichtung liegenden Breitseite. In Fig. 6 ist der nach einer stoßartig aufgebrachten Drucklast ausgeknickte Metallstab (5) dargestellt.

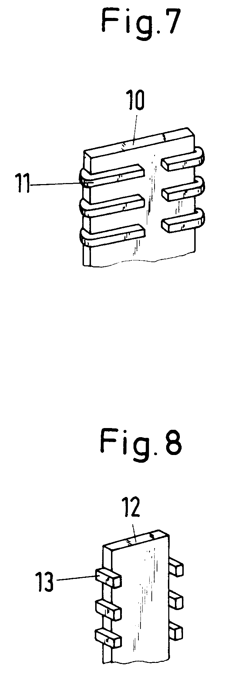

Fig. 7 zeigt in perspektivischer Darstellung das Teilstück eines Metallstabs (10), bei dem die Geradverzahnung durch an seinen beiden Schmalseiten kammartig angebrachte und auf die eine Breitseite gebogene Zinken (11) gebildet ist.

In Fig. 8 ist in perspektivischer Darstellung das Teilstück eines Metallstabs (12) wiedergegeben, an dessen Schmalseiten kammartig angebrachte, als Geradverzahnung wirkende Zinken (13) so gebogen sind, daß sie mit der einen Breitseite einen Winkel von 90° bilden.

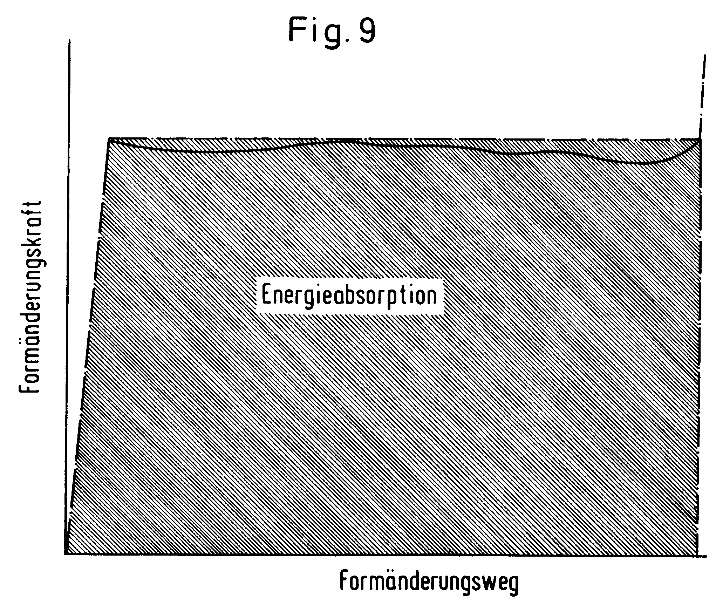

Die dynamische Kraft-Weg-Kennlinie des erfindungsgemäß ausgebildeten Metallstabs (1,5,10,12) wurde an mehreren Proben ermittelt. Auf kurzem Formänderungsweg baut sich zunächst eine vergleichsweise hohe Formänderungsdruckkraft auf. Nach Erreichen der Eulerschen Knickkraft bleibt diese Druckkraft über einen vergleichsweise langen Formänderungsweg annähernd konstant, wie das in Fig. 9 dargestellte Kraft-Weg-Diagramm zeigt. Der Metallstab kommt damit dem idealen Energieabsorptionsvermögen sehr nahe.

## Patentansprüche

1. Bauelement, verwendet zur Absorption von Energie, bestehend aus einem im Verhältnis zu seinen Querabmessungen langen, prismatischen, geraden, unter axial wirkender Drucklast in Richtung der Achse des größeren Hauptträgheitsmoments nicht-elastisch ausknickbaren Metallstab (1, 5, 10), gekennzeichnet durch wenigstens auf derjenigen der beiden Breitseiten des Metallstabes (1, 5, 10), die senkrecht zur Achse des größeren Hauptträgheitsmoments steht und der gewünschten Ausknickrichtung gegenüberliegt, eine quer zur Längsabmessung verlaufende Geradverzahnung (4, 7, 11), so daß sich bei der gewünschten Ansknickbewegung die Zähne der Geradverzahnung (4, 7, 11) aufeinander abstützen.

2. Bauelement nach Anspruch 1, dadurch gekennzeichnet, daß die Geradverzahnung (7) im Bereich der freien Knicklänge (6) des Metallstabs (5) angebracht ist.

3. Bauelement nach Anspruch 2, dadurch gekennzeichnet, daß die Geradverzahnung (7) in den Bereichen zwischen den Befestigungen (8) des Metallstabs (5) und den Wendepunkten (9) der Ausknickung auf der in die gewünschte Ausknickrichtung weisenden Breitseite angebracht ist.

4. Bauelement nach einem oder mehreren der Ansprüche 1 bis 3, dadurch gekennzeichnet, daß die Geradverzahnung (4,7) über die gesamte Breitseite des Metallstabs (1,5) verläuft.

5. Bauelement nach einem oder mehreren der Ansprüche 1 bis 3, dadurch gekennzeichnet, daß die von den parallel zu der die Achsen des kleineren und größeren Hauptträgheitsmoments einschließenden Ebene liegenden Schmalseiten des Metallstabs her angebrachte Geradverzahnung jeweils über weniger als 50 %, vorzugsweise 20 bis 40 %, der Breitseite verläuft.

6. Bauelement nach einem oder mehreren der Ansprüche 1 bis 5, dadurch gekennzeichnet, daß die Geradverzahnung durch an der einen oder beiden Schmalseiten des Metallstabs (10) einteilig mit diesem verbundene, kammartig angeordnete und auf die Breitseiten gebogene Zinken (11) gebildet ist.

7. Bauelement nach einem oder mehreren der Ansprüche 1 bis 6, dadurch gekennzeichnet, daß die Zähne der Geradverzahnung des Metallstabs ein Evolventen-, Zykloiden-, Kreisbogen- oder U-Profil mit senkrechten oder geneigten Zahnflanken besitzen.

8. Bauelement gemäß Oberbegriff des Anspruchs 1, dadurch gekennzeichnet, daß eine Geradverzahnung in Form von Zinken (13) an mindestens einer der beiden Schmalseiten des Metallstabes (12) einteilig mit diesem verbunden angeordnet ist, wobei die Zinken (13) kammartig über diejenige der Breitseiten des Metallstabes (12) hinaus abstehen, die entgegengesetzt zur Ausknickrichtung des Metallstabes (12) angeordnet ist, wobei die Zinken (13) mit der Breitseite einen Winkel von 90° bilden und sich bei der Ausknickbewegung aufeinander abstützen.

9. Verwendung des Bauelements nach einem oder mehreren der Ansprüche 1 bis 8 als Halterung für Stoßstangen von Kraftfahrzeugen.

10. Verwendung des Bauelements nach einem oder mehreren der Ansprüche 1 bis 8 für den Einbau im Bereich der Knautschzonen vor und hinter der Fahrgastzelle von Kraftfahrzeugen.

11. Verwendung des Bauelements nach einem oder mehreren der Ansprüche 1 bis 8 für die Speichen von Lenkrädern.

## Claims

1. A component, used for absorbing energy, consisting of a prismatic, straight metal rod (1, 5, 10) which is long in relation to its transverse dimensions and is designed to buckle inelastically in the direction of the axis of the larger principal moment of inertia under axially-acting pressure load, characterised by spur teeth (4, 7, 11) extending transversely to the longitudinal dimension at least on the one of the two broad sides of the metal rod (1, 5, 10) which is at right-angles to the axis of the larger principal moment of inertia and lies opposite the desired direction of buckling, so that upon the desired buckling movement the teeth of the spur teeth (4, 7, 11) are supported on one another.

2. A component according to Claim 1, characterised in that the spur teeth (7) are attached in the region of the free buckling length (6) of the metal rod (5).

3. A component according to Claim 2, characterised in that the spur teeth (7) are attached on the broad side which faces in the desired direction of buckling in the regions between the attachments (8) of the metal rod (5) and the inflection points (9) of the buckled portion.

4. A component according to one or more of Claims 1 to 3, characterised in that the spur teeth (4, 7) extend over the entire broad side of the metal rod (1, 5).

5. A component according to one or more of Claims 1 to 3, characterised in that the spur teeth attached from the narrow sides of the metal rod lying parallel to the plane enclosing the axes of the smaller and larger principal moment of inertia extend in each case over less than 50%, preferably 20 to 40%, of the broad side.

6. A component according to one or more of Claims 1 to 5, characterised in that the spur teeth are formed by a comb-like array of tines (11) which are connected integrally to the metal rod (10) on one or both narrow sides thereof and are bent on the broad sides.

7. A component according to one or more of Claims 1 to 6, characterised in that the teeth of the spur teeth of the metal bar have an involute, cycloid, arcuate or U-shaped profile having right-angled or inclined tooth surfaces.

8. A component according to the preamble of Claim 1, characterised in that spur teeth in the form of tines (13) are arranged on at least one of the two narrow sides of the metal rod (12), connected integrally thereto, the tines (13) projecting in comb-like manner beyond those of the broad sides of the metal rod (12), which are arranged opposed to the direction of buckling of the metal rod (12), the tines (13) forming an angle of 90° with the broad side and being supported on each other upon the buckling movement.

9. The use of the component according to one or more of Claims 1 to 8, as a holder for bumpers of motor vehicles.

10. The use of the component according to one or more of Claims 1 to 8 for insertion in the region of the crumple zones in front of and behind the passenger compartment of motor vehicles.

11. The use of the component according to one or more of Claims 1 to 8 for the spokes of steering-wheels.

## Revendications

1. Élément de construction servant à absorber de l'énergie, constitué par une barre métallique prismatique rectiligne (1,5,10), qui a une longueur importante par rapport à ses dimensions transversales et peut être coudée d'une manière non élastique dans la direction de l'axe du moment d'inertie principal le plus élevé, sous l'action d'une charge de pression agissant axialement, caractérisé par une denture droite (4,7,11) qui s'étend transversalement par rapport à la dimension longitudinale et est située au moins sur celui des deux grands côtés de la barre métallique (1,5,10), qui est perpendiculaire à l'axe du moment d'inertie principal le plus élevé et est situé à l'opposé de la direction de coudage désiré, de sorte que lors du déplacement de coudage désiré, les dents de la denture droite (4,7,11) prennent appui les unes sur les autres.

2. Élément de construction suivant la revendication 1, caractérisé par le fait que la denture droite (7) est disposée dans la zone de la longueur libre de coudage (6) du barreau métallique (5).

3. Élément de construction suivant la revendication 2, caractérisé par le fait que la denture rectiligne (7) est disposée dans les zones situées entre les fixations (8) de la barre métallique (5) et les points d'inflexion (9) du coudage sur le grand côté tourné dans la direction de coudage désirée.

4. Élément de construction suivant une ou plusieurs des revendications 1 à 3, caractérisé par le fait que la denture droite (4,7) s'étend sur la totalité du grand côté de la barre métallique (1,5).

5. Élément de construction suivant une ou plusieurs des revendications 1 à 3, caractérisé par le fait que la denture droite, qui s'étend à partir des petits côtés de la barre métallique, qui sont parallèles au plan formé par des axes du moment d'inertie principal le plus faible et du moment d'inertie principal le plus élevé, s'étend respectivement sur moins de 50 % et de préférence sur 20 à 40 % du grand côté.

6. Élément de construction suivant une ou plusieurs des revendications 1 à 5, caractérisé par le fait que la denture droite est formée par des dents (11) qui sont reliées d'un seul tenant à la barre métallique (10) sur l'un des petits côtés ou sur les deux petits côtés de cette barre, sont disposées à la manière d'un peigne et sont rabattues sur les grand côtés.

7. Élément de construction suivant une ou plusieurs des revendications 1 à 6, caractérisé par le fait que les dents de la denture droite de la barre métallique possèdent un profil en développante, en cycloïde, en arc de cercle ou en U, avec des flancs perpendiculaires ou inclinés.

8. Élément de construction suivant le préambule de la revendication 1, caractérisé par le fait qu'une denture droite sous la forme de dents (13) est disposée sur au moins l'un des grands côtés de la barre métallique (12) en y étant raccordée d'un seul tenant, les dents (13) faisant saillie à la manière d'un peigne au-delà de celui des grands côtés de la barre métallique (12), qui est tourné à l'opposé de la direction de coudage de la barre métallique (12), les dents (13) faisant un angle de 90° par rapport au grand côté et prenant appui les unes sur les autres lors du déplacement de coudage.

9. Utilisation de l'élément de construction suivant une ou plusieurs des revendications 1 à 8, en tant que support pour des pare-chocs de véhicules automobiles.

10. Utilisation de l'élément de construction suivant une ou plusieurs des revendications 1 à 8 pour son montage au niveau des zones de déformation en avant et en arrière de l'habitacle de véhicules automobiles.

11. Utilisation de l'élément de construction suivant une ou plusieurs des revendications 1 à 8, pour les rayons de volants.
